# EUROPÄISCHE PATENTANMELDUNG

(11) **EP 0 782 210 A2**
(43) Veröffentlichungstag der Anmeldung: **02.07.1997**
(21) Anmeldenummer: 96117744.1
(22) Anmeldetag: 06.11.1996
(51) Int. Cl.: H01M 10/28, H01M 4/26, H01M 2/12, H01M 2/30, H01M 2/04

(54) **Verfahren zur Herstellung von prismatischen alkalischen Akkumulatorzellen**

(30) Priorität: 25.11.1995 DE 19544050
(71) Anmelder: Christoph Emmerich GmbH & Co. KG, D-60435 Frankfurt am Main (DE)
(72) Erfinder: Kilb, Manfred, 60435 Frankfurt/Main (DE)
(74) Vertreter: Blumbach, Kramer & Partner

(57) **Zusammenfassung**

Es wird ein Verfahren zur Herstellung von prismatischen, alkalischen Akkumulatorzellen mit Rechteckquerschnitt beschrieben, bei dem zunächst eine Elektrodenbaugruppe, bestehend aus positiven und negativen Elektroden (10, 11) mit zwischenliegenden Separatoren (12) und einem Deckel (14) aus Kunststoff hergestellt wird, der Durchführungen und Anschlußkontakte (16) für die Elektroden (10, 11) enthält. Nach dem Füllen eines Gehäuses (24) aus Kunststoff mit einer abgemessenen Elektrolytmenge (25) wird die Elektrodenbaugruppe stufenweise und mit Pausen in das Gehäuse abgesenkt, derart, daß sich das trockene Elektrodenpaket vollsaugen kann, ohne daß Elektrolyt aus dem Gehäuse (24) austritt. Wenn der Deckel (14) dann auf dem Gehäuse (24) aufsitzt, können beide Teile absolut dicht miteinander verschweißt werden. Zum Abbau eines eventuellen, auch hohen Überdrucks durch unsachgemäße Behandlung enthält der Deckel (14) in einer Formnische (18) einen Gummistift (19), der eine in das Gehäuseinnere führende Deckelbohrung (20) abdeckt, und eine Kunststoffkugel (21), die in die Formnische (18) des Deckels (14) eingepreßt ist und den Gummistift (19) festlegt. Bei geringem Überdruck hebt dann zuerst der Gummistift (19) von der Bohrung (20) ab und läßt Gas nach außen dringen. Bei sehr hohem, plötzlichem Überdruck werden der Gummistift 19 und die Kugel (21) ausgeschleudert.

## Beschreibung

Die Erfindung betrifft ein Verfahren nach dem Oberbegriff des Patentanspruchs 1.

Prismatische Akkumulatoren mit Rechteckquerschnitt, im Sonderfall auch quadratischem Querschnitt, nutzen das vorhandene Bauvolumen in Geräten wesentlich besser aus als zylindrische Rundzellen, die auch bei dichtester Packung immer Freiräume benötigen. Vorteilhaft ist bei Rundzellen aber, daß man die Elektroden aus Bandabschnitten mit zwischenliegendem Separator wickeln kann. Eine solche Technik ist zur vollständigen Ausfüllung eines Rechteckquerschnitts bis in die Ecken nicht anwendbar. Das Stapeln rechteckig geformter Elektroden unter Zwischenlage von Separatoren ist dagegen aufwendig, und zwar auch wegen der Anschlüsse an die einzelnen Elektroden, die dann paarweise für die positiven bzw. negativen Elektroden parallel geschaltet werden müssen. Eine weitere Schwierigkeit bei prismatischen Zellen mit Rechteckquerschnitt besteht in der Verbindung zwischen dem Gehäuse für die Elektroden und einem Abschlußdeckel, der Durchführungen für den Anschluß an die Elektroden haben muß. Dies gilt insbesondere dann, wenn nach dem Stand der Technik ein Gehäuse und auch ein Deckel aus oberflächenvergütetem Stahlblech oder auch einem Blech aus anderem Material verwendet wird. Die Verbindung zwischen dem Deckel und dem Gehäuse muß nicht nur mechanisch stabil, sondern wegen des aggressiven alkalischen Elektrolyten auch absolut dicht sein. Zusätzlich ist im Gehäuse ein Sicherheitsventil anzuordnen, das bei unsachgemäßer Ladung oder Entladung der Zelle und dabei auftretender unzulässiger Erwärmung und Drucksteigerung im Inneren der Zelle anspricht. Zusätzliche Anforderungen betreffen eine möglichst hohe Kapazität der prismatischen Zellen bei möglichst niedrigem Gewicht sowie insbesondere möglichst kurze Taktzeiten bei der Herstellung der Zellen, um niedrige Kosten zu erzielen.

Der Erfindung liegt die Aufgabe zugrunde, ein Verfahren zur Herstellung solcher prismatischen, alkalischen Akkumulatoren mit Rechteckquerschnitt anzugeben, das die oben erläuterten Schwierigkeiten überwindet und die erläuterten Forderungen erfüllt. Die Lösung der Aufgabe ist im Patentanspruch 1 angegeben.

Die Verwendung eines Bandes aus Nickelvlies oder Nickelschaum ermöglicht zum einen eine sichere und einfache Einbringung des aktiven Materials durch Pastieren. Dabei können sehr lange Bänder auf einer automatischen Fertigungsstraße verarbeitet werden, die nicht nur die selektive Pastierung der Bänder sondern auch das Auftrennen des Bandes in Elektroden einschließlich des Ausklinkens des oder der nicht beschichteten (pastierten) Bandstreifen zur Erzeugung der Anschlußstreifen durchführt. Gleiches gilt für das Trocknen und Kalandern des Bandes auf die gewünschte Dicke. Dabei lassen sich sehr kurze Taktzeiten erreichen. Für die Herstellung der positiven und der negativen Elektroden kann die gleiche Fertigungsstraße benutzt werden. Dazu ist nur eine Umstellung des jeweiligen Beschichtungsmaterials erforderlich. Es lassen sich aber auch zwei parallele Fertigungsstraßen einrichten.

Das abwechselnde Schichten positiver und negativer Elektroden unter Zwischenlage von Separatoren kann ebenfalls in einer automatischen Anlage mit kurzen Taktzeiten durchgeführt werden. Gleiches gilt für die Verfahrensschritte zur Herstellung der Deckel aus Kunststoff sowie für das Fertigstellen der Elektrodenbaugruppen unter Verschweißen der positiven bzw. negativen Anschlußstreifen mit den Ableitern auf der Innenseite der Deckel.

Durch die Verwendung von Kunststoffgehäusen ist eine sehr sichere und dichte Verbindung zwischen dem Gehäuse und seinem Deckel durch Verschweißen möglich. Gleichzeitig sorgt die Verwendung von Kunststoff für das Gehäuse und den Deckel für niedriges Gewicht und daher hohe Kapazität bezogen auf das Gewicht der Zelle. Das Befüllen der Gehäuse mit einer abgemessenen Elektrolytmenge und das anschließende, stufenweise Absenken der nicht vorgetränkten Elektrodenpakete ist deswegen besonders vorteilhaft, weil keine besonderen Maßnahmen zur Handhabung elektrolytgetränkter Bauteile erforderlich sind. Bei richtiger Durchführung der Füllung und des Absenkens kommt die Umgebung der Zellen, also sowohl die zur Durchführung der Schritte verwendeten automatischen Einrichtungen als auch die Bedienungspersonen nicht mit dem aggressiven Elektrolyten in Berührung.

Weiterbildungen der Erfindung sind Gegenstand der Unteransprüche. So können, wie bereits erläutert, die Verfahrensschritte (1) bis (4) im Durchlaufverfahren durch automatische Vorrichtungen ausgeführt werden. Das ermöglicht die Herstellung großer Stückzahlen pro Zeiteinheit, d.h. die Einhaltung sehr kurzer Taktzeiten. Auf zweckmäßige Weise können die zwischen den positiven und negativen Elektroden liegenden Separatoren dadurch erzeugt werden, daß die positiven Elektroden unter Freilassen der Anschlußstreifen in einen Separatorabschnitt eingeschlagen werden, so daß sie in einer dadurch gebildeten Tasche liegen. Die an den drei Seiten der Elektrode aneinanderstoßenden Ränder der Tasche werden dann anschließend verschweißt. Auf diese Weise ist sichergestellt, daß auch bei nicht präziser Ausrichtung der Elektroden eines Stapels eine direkte Berührung zwischen den positiven und negativen Elektroden stattfinden kann.

Beim Beschichten oder Pastieren des Vlies- oder Schaumbandes wird mit Vorteil der Längsmitte des Bandes ein Streifen frei von aktiver Masse gehalten. Beiderseits dieses Mittelstreifens ist dann je eine Elektrode angeordnet, deren Anschlußstreifen nach dem Ausklinken des zwischenliegenden Streifenmaterials gegeneinander versetzt sind, so daß nur geringer Abfall entsteht. Bei Bedarf können auf einem Band mehrere Strukturen dieser Art angeordnet sein, so daß zwei oder mehr Elektrodenpaare gleichzeitig gefertigt werden können.

Nach dem Aufeinanderschichten der Elektroden wird zweckmäßig das Elektrodenpaket auf eine definierte Dicke gepreßt, damit es später ohne Schwierigkeiten in ein Gehäuse eingeschoben werden kann.

Ein nach dem Verfahren hergestellter Deckel zeichnet sich dadurch aus, daß die Nieten unter Zwischenlage einer Dichtung, die in einer Ringnut des Deckels liegt, zwischen dem als Anschlußkontakt dienenden Nietenkopf und dem Deckel angeordnet ist. Beim Vernieten der Ableiter mit dem Deckel werden dann Kontaktdurchführungen hergestellt, die absolut dicht sind, so daß kein Elektrolyt nach außen durchtreten kann. Das Sicherheitsventil weist mit Vorteil einen Gummistift mit Kreisquerschnitt auf, der in einem angepaßten zylindrischen Abschnitt der Formnische angeordnet ist, sowie eine Kunststoffkugel, die von der Außenseite des Deckels unter Anliegen an einer Stirnseite des Gummistiftes in eine Rille der Formnische eingepreßt wird. Außerdem führt von dem zylindrischen Abschnitt der Formnische ein Kanal zur Innenseite des Deckels, so daß nach Abheben des Gummistiftes von seinem innenseitigen Sitz bei einer Druckerhöhung Gas bzw. Flüssigkeit austreten kann. Wenn ein sehr hoher Druckanstieg auftritt, kann zusätzlich die Kugel über den Gummistift aus ihrem Sitz nach außen geschleudert werden.

Nachfolgend wird ein Ausführungsbeispiel für das erfindungsgemäße Verfahren anhand der Zeichnungen beschrieben. Es zeigen:
- Fig. 1: schematisch einen Abschnitt eines Bandes aus Nickelvlies oder Nickelschaum mit angedeuteten Elektroden;
- Fig. 2: Verfahrensschritte a), b) und c) zur Herstellung eines Elektrodenpakets.
- Fig. 3: Verfahrensschritte a) bis g) zur Herstellung eines Deckels;
- Fig. 4: einen vergrößerten Querschnitt eines fertigen Deckels als Ergebnis der Verfahrensschritte gemäß Fig. 3;
- Fig. 5: Verfahrensschritte a) bis e) zur Herstellung einer Elektrodenbaugruppe;
- Fig. 5f: eine vergrößerte Seitenteilansicht der Elektrodenbaugruppe als Ergebnis des Verfahrensschritts e) in Fig. 5;
- Fig. 6: Verfahrensschritte a), b) und c) zur Bereitstellung, Prägung und Elektrodenbefüllung eines Kunststoffgehäuses;
- Fig. 7: Verfahrensschritte a) bis d) zur Fertigstellung der Akkumulatorzelle.

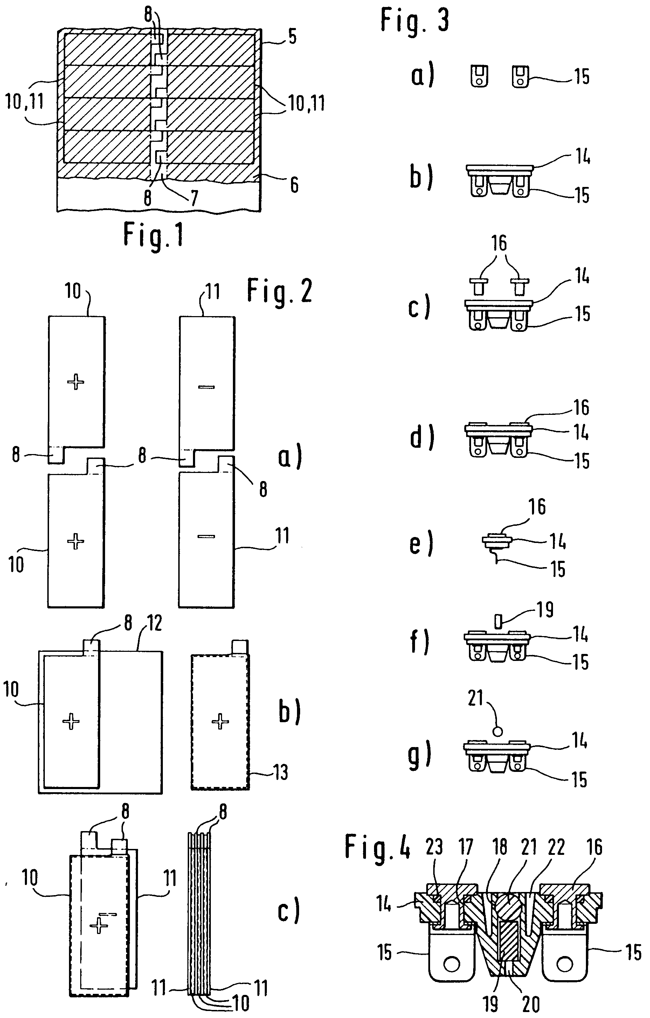

Zur Herstellung der positiven und negativen Elektroden 10 bzw. 11 für eine prismatische alkalische Akkumulatorzelle mit Rechteckquerschnitt wird von einem Band 5 aus Nickelschaum ausgegangen, das in einer automatischen Fertigungsstraße mit dem aktiven Material für positive bzw. negative Elektroden beschichtet wird. Wie in Fig. 1 schraffiert dargestellt, erfolgt die Beschichtung derart, daß ein mittlerer Längsstreifen 7 frei bleibt. Der Nickelschaum dieses Streifens 7 dient zur Herstellung der Anschlußstreifen 8 für die Elektroden 10 bzw. 11. Der Nickelschaum eines Bandes für positive Elektroden hat beispielsweise eine Porosität von 80 ppi (Poren pro Inch) und ein Band für negative Elektroden beispielsweise eine Porosität von 60 ppi. Das Beschichtungsmaterial für die positiven Elektroden ist in an sich bekannter Weise sphärisches Nickelhydroxid mit einer Korngröße bis 150 mµ und einer Härte von etwa 3 bis 4 Mohs. Als Beschichtungsmaterial für die negative Elektrode wird beispielsweise eine Metall-Hydrid-Legierung (Seltenerden La-Ce 30-40%, Nickel 50-60%, Mn-Al 5-10%) mit einer Korngröße bis 150 mµ und einer Härte von ca. Hrc 55 verwendet.

Nach der Beschichtung eines negativen bzw. positiven Elektrodenbandes 5 folgen verschiedene Schritte in einer automatischen Anlage zur Fertigstellung des Bandes, beispielsweise Trocknen des Beschichtungsmaterials, Kalandern auf eine vorgegebene Dicke, gegebenenfalls Beschneiden usw. Anschließend werden die Elektroden 10 bzw. 11 ausgestanzt. Dabei erfolgt auch ein Ausklinken des Mittelstreifenmaterials 7 zwischen den Anschlußstreifen 8. Man erhält dann die Elektroden entsprechend der Darstellung in Fig. 2a).

Gemäß Fig. 2b) werden die positiven Elektroden 10 dann in einen rechteckigen Abschnitt 12 eines Separatormaterials eingewickelt. Links in Fig. 2b) liegt die Elektrode 10 auf dem Material 12. Der rechte Teil des Abschnitts wird dann gemäß Fig. 2b), rechts umgeschlagen und anschließend an den aufeinanderliegenden kanten verschweißt. Die Elektroden 10 liegen dann sicher in einer Tasche 13, wobei der Anschlußstreifen 8 nach außen ragt und frei bleibt.

Anschließend werden die Elektroden 10, 11 gemäß Fig. 2c) deckungsgleich geschichtet (aus Gründen besserer Übersichtlichkeit sind in Fig. 2c), links, die positiven Elektroden 10 gegen die negativen Elektroden 11 versetzt). Die Anschlußstreifen 8 befinden sich dabei auf entgegengesetzten Enden der Elektrodenstirnfläche.

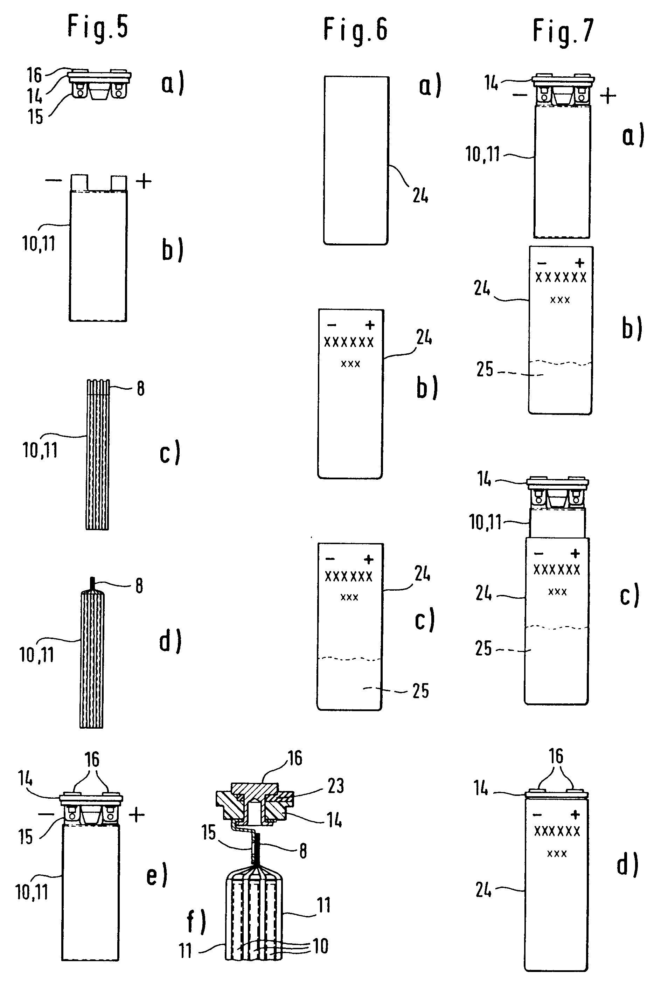

Zur Herstellung einer Elektrodenbaugruppe (vgl. Fig. 5e) und 5f)), die aus einem Deckel und einem Elektrodenpaket gemäß Fig. 2c) besteht, wird zunächst entsprechend der schematischen Darstellung in Fig. 3 der Deckel mit zugehörigen Teilen in einer automatischen Anlage hergestellt. In einen aus Kunststoff gespritzten Deckel 14 werden Elektrodenableiter 15 auf der Innenseite des Deckels aufgesteckt. Eine genauere Darstellung der Einzelteile findet sich in der vergrößerten Schnittdarstellung gemäß Fig. 4. Dann steckt man Nieten 16 durch Bohrungen 17 (Fig. 4) des Deckels 14 und entsprechende Bohrungen der abgewinkelten Elektrodenableiter 15. Gemäß Fig. 3d) ist damit der Deckel 14 mit den durch die Ableiter 15 und die Nieten 16 erzeugten Durchführungen und den Köpfen der Niete 16 als Anschlußkontakte fertiggestellt.

Fig. 3e) zeigt zur Verdeutlichung noch einmal eine Teilseitenansicht des abgewinkelten Ableiters 15, des Deckels 14 und der Nieten 16.

Aus Sicherheitsgründen ist es erforderlich, eine solche alkalische Zelle mit einem Sicherheitsventil zu versehen, um ein Platzen infolge eines erhöhten Innendrucks bei unsachgemäßer Behandlung zu vermeiden. Dazu weist der Deckel 14 eine im wesentlichen zylindrische Formnische 18 mit Ansätzen und Ausdrehungen auf. In die Formnische 18 wird gemäß Fig. 3f) zunächst ein Gummistift 19 eingeführt, der einen zur Innenseite der Zelle führenden Kanal 20 verschließt. Der Gummistift 19 wird durch eine Kunststoffkugel 21 an seinem Platz gehalten, die in eine Ausnehmung (Randnut) der Formnische 18 eingedrückt wird und dort verrastet ist. Damit die Wände der Formnische 18 beim Eindrücken der Kunststoffkugel 21 nachgeben können, ist die Formnische 18 von einer umlaufenden Ausnehmung 22 umgeben.

Beim Auftreten eines erhöhten Innendrucks in der Zelle wird zunächst der Gummistift 19 von seinem Sitz abgehoben, so daß Gas durch den Kanal 20 und seitliche Rinnen (nicht dargestellt) in der Formnische 18 nach außen entweichen kann.

Wie Fig. 4 außerdem zeigt, sind die Köpfe der Niete 16 unter Zwischenlage je einer Ringdichtung 23 auf dem Deckel 14 festgelegt.

Gemäß Fig. 5a) und 5b) wird dann jeweils ein Deckel 14 mit einem Elektrodenpaket gemäß Fig. 2c) bzw. Fig. 5b) und 5c) zusammengeführt. Anschließend werden, wie Fig. 5d) zeigt, die positiven bzw. negativen Anschlußstreifen 8 zusammengepreßt, so daß sie gemäß Fig. 5e) mit den Elektrodenableitern 15 punktverschweißt werden können. Das ist besonders gut in Fig. 5f) zu erkennen.

Zur Fertigstellung der Zelle wird ein aus Kunststoff bestehendes Gehäuse 24 (Fig. 6a)) zugeführt. Als Kunststoff für das Gehäuse 24 wird vorzugsweise ein Thermoplast-Elastomer, insbesondere aus einem modifizierten Polyamid, einem Styrol-Ethylen-Butylene-Styrol-Copolvmer, und/oder einem Polypropylen verwendet, wobei Glas- oder Kohlefasern in den Kunststoff eingebettet sein können . Das Gehäuse 24 erhält gemäß Fig. 6b) eine Einprägung, die beispielsweise die Herstellerfirma und technische Daten enthält. Danach füllt man das Gehäuse gemäß Fig. 6c) mit einer bestimmten Elektrolytmenge 25, die empirisch ermittelt wird. Die trockene Elektrodenbaugruppe gemäß Fig. 5e) und f) wird danach in das Gehäuse 24 langsam abgesenkt, bis sie in Berührung mit dem Elektrolyten 25 kommt. Entsprechend dem Fortschritt beim Aufsaugen des Elektrolyten durch die Elektrodenbaugruppe schiebt man dann in mehreren Stufen und zwischengeschalteten Pausen die Elektrodenbaugruppe in das Gehäuse 24 ein. Wenn dann der Deckel 14 auf dem Gehäuse 24 gemäß Fig. 7d) aufliegt, können beide Teile miteinander absolut dicht verschweißt werden. Die Zahl der Stufen und der zwischenliegenden Pausen wird empirisch so ermittelt, daß einerseits der Endzustand gemäß Fig. 7d) möglichst schnell erreicht wird, andererseits aber kein Elektrolyt aus dem Gehäuse 24 während des Einschiebens der Elektrodenbaugruppe austritt.

Zur anschließenden Prüfung und ggf. Aussonderung schadhafter Zellen erfolgt eine Schnellformation. Dabei werden beispielsweise Zellen mit einer Kapazität von 600 mAh für 2,5 Sekunden mit 600 mA geladen. Liegt die Zellenspannung dann innerhalb eines Fensters von 1,5 Volt bis 1,6 Volt, so gelten die Zellen als gut, im anderen Fall als schlecht. Die schlechten Zellen werden dann ausgesondert.

## Patentansprüche

1. Verfahren zur Herstellung von prismatischen, alkalischen Akkumulatorzellen mit Rechteckquerschnitt, gekennzeichnet durch die Verfahrensschritte:
(1) Herstellen einer Elektrodenbaugruppe mit den Verfahrensschritten:
a) Zuführen eines Bandes (5) aus Nickelvlies oder Nickelschaum,
b) Pastieren des Bandes (5) mit der aktiven Masse für positive bzw. negative Elektroden (10, 11) unter Freilassen eines oder mehrerer Bandstreifen (7), die im Bereich der späteren Elektrodenanschlüsse (8) liegen,
c) Trocknen und Kalandern des Bandes (5) auf die gewünschte Dicke,
d) Trennen des Bandes (5) in Elektroden (10, 11) der gewünschten Breite und teilweises Ausklinken des oder der Bandstreifen (7) ohne aktive Masse, derart, daß ein Anschlußstreifen (8) an einem Elektrodenrand stehen bleibt,
e) abwechselndes, deckungsgleiches Schichten positiver und negativer Elektroden (10, 11) unter Zwischenlage je eines Separators (12), derart, daß die Anschlußstreifen (8) der positiven und negativen Elektroden (10, 11) jeweils getrennt übereinander liegen und ein Elektrodenpaket entsteht,
(2) Herstellen von Deckeln (14) aus Kunststoff mit Anschlußkontakten (16) für die Zellen mit den Verfahrensschritten:
a) Zuführen von Deckeln (14) aus Kunststoff, die je zwei Bohrungen (17) für die Anschlußkontakte (16) besitzen,
b) Einstecken von Nieten (16) als Anschlußkontakte in die Deckelbohrungen (17),
c) Aufstecken von mit je einer Bohrung versehenen Elektrodenableitern (15) auf die freien Enden der Niete (16)
d) Anformen und Fertigformen der Niete (16) zur Befestigung der Elektrodenableiter (15) auf der Innenseite der Deckel (14) und damit Herstellen einer laugendichten Durchführung durch die Deckel (14)
e) Einführen und Festlegen eines Sicherheitsventils (19, 21) in einer zentralen Formnische (18) des Deckels (14),
(3) Fertigstellen der Elektrodenbaugruppe mit den Verfahrensschritten:
a) Zusammenpressen der Anschlußstreifen (8) an den positiven bzw. negativen Elektroden (10, 11) eines Pakets,
b) Punktverschweißen der zusammengepreßten Anschlußstreifen (8) mit den Elektrodenableitern (15) auf der Innenseite des Deckels (14),
(4) Fertigstellen der Zelle mit den Verfahrensschritten:
a) Zuführen eines prismatischen Kunststoffgehäuses (24), das an einer Stirnseite zum Verschluß mit einem Deckel (14) gemäß (2) offen ist,
b) Befüllen eines Gehäuses (24) mit einer abgemessenen Elektrolytmenge (25),
c) Absenken des Elektrodenpakets einer Elektrodenbaugruppe in mehreren, zeitlich getrennten Stufen in das Gehäuse (24),
d) Verschweißen des Deckels (14) der Elektrodenbaugruppe mit dem Gehäuse (24),
e) Schnellformatieren der Zelle in einer Prüfstation,
f) Aussortieren ausgefallener Zellen anhand der Werte bei der Schnellformation.

2. Verfahren nach Anspruch 1, dadurch gekennzeichnet, daß die Verfahrensschritte (1) bis (4) im Durchlaufverfahren durch automatische Vorrichtungen ausgeführt werden.

3. Verfahren nach Anspruch 1 oder 2, dadurch gekennzeichnet, daß beim Verfahrensschritt (1)d) das Ausklinken vor dem Trennen erfolgt.

4. Verfahren nach einem der Ansprüche 1 bis 3, dadurch gekennzeichnet, daß das Schichten der Elektroden (10, 11) gemäß Schritt (1)e) in einer Vorrichtung mit einer der Elektrodenform entsprechenden Ausrichtvertiefung erfolgt.

5. Verfahren nach einem der Ansprüche 1 bis 4, dadurch gekennzeichnet, daß die gemäß Schritt (1)e) zwischen den positiven und negativen Elektroden (10, 11) liegenden Separatoren durch folgende Schritte entstehen:
a) Einschlagen der positiven Elektroden (10) in einen Separatorabschnitt (12) unter Freilassen der Anschlußstreifen (8) und Bildung einer Tasche (13),
b) Verschweißen der an drei Seiten der Elektroden aneinanderstoßenden Ränder der Tasche (13).

6. Verfahren nach einem der Ansprüche 1 bis 5, dadurch gekennzeichnet, daß beim Verfahrensschritt (1)b) in der Längsmitte des Bandes (5) ein Streifen (7) frei von aktiver Masse bleibt und beiderseits des Mittelstreifens (7) je eine Elektrode (10, 11) angeordnet ist, deren Anschlußstreifen (8) gegeneinander versetzt sind.

7. Verfahren nach einem der Ansprüche 1 bis 6, dadurch gekennzeichnet, daß vor dem Verfahrensschritt (3)a) das Elektrodenpaket auf eine definierte Dicke gepreßt wird.

8. Deckel, hergestellt nach dem Verfahren gemäß Anspruch 1, dadurch gekennzeichnet, daß die Niete (16) unter Zwischenlage einer in einer Ringnut des Deckels liegenden Dichtung (23) zwischen dem als Anschlußkontakt dienenden Nietenkopf und dem Deckel (14) eingebracht werden.

9. Deckel nach Anspruch 8, dadurch gekennzeichnet, daß das Sicherheitsventil einen in einem zylindrischen Abschnitt der Formnische (18) angeordneten, im Durchmesser angepaßten Gummistift (19) und eine Kunststoffkugel (21) aufweist, die von der Außenseite des Deckels (14) an einer Stirnseite des Gummistiftes (19) anliegend in einer Rille der Formnische (18) eingepreßt ist, und
daß von dem zylindrischen Abschnitt der Formnische (18) ein Kanal zur Innenseite des Deckels (14) führt.

10. Elektrode, hergestellt nach dem Verfahren gemäß Anspruch 1, dadurch gekennzeichnet, daß die Längskanten der positiven oder negativen Elektrode (10, 11) eine Verdichtung aufweisen.
